# EUROPEAN PATENT APPLICATION

(11) **EP 1 101 737 A1**
(43) Date of publication of application: **23.05.2001**
(21) Application number: 00500235.7
(22) Date of filing: 16.11.2000
(51) Int. Cl.: C02F 1/66, C02F 1/52

(54) **Method of sedimentation of collodial semiconductor particles**

(30) Priority: 16.11.1999 ES 9902508
(71) Applicant: CENTRO DE INVESTIGACIONES ENERGETICAS MEDIOAMBIENTALES Y TECNOLOGICAS (C.I.E.M.A.T.), E-28040 Madrid (ES)
(72) Inventor: Blanco Galvez, Julián, 04250 Pechina (Almeria) (ES); Malato Rodriguez, Sixto, 04003 Almeria (ES); De las Nieves Lopez, Javier, 04729 Aguadulce (Almeria) (ES); Fernandez Ibanez, Pilar, 04250 Pechina (Almeria) (ES)
(74) Representative: Del Santo Abril, Natividad

(57) **Abstract**

This is based on the control of the pH of the colloidal suspension, modifying it in such a way so as to reach the isoelectric point that is characteristic of each type of particle in the presence of a determined electrolyte. Once the photocatalysis treatment is finished the colloidal suspension is stored in a tank and after homogenizing it by means of conventional mixers a sample representative of the total volume is taken and a base or acid is added to it until attaining the zero charge point of the sample. Following this the adequate amount of a base or an acid is added to the storage tank, extrapolated from the previous step, thus attaining the zero electrical charge point of the volume stored in the tank. To conclude, the clean supernatant is removed, once the sedimentation of the catalyzer has occurred at the bottom of the storage tank.

## Description

The invention describes a method of sedimentation to remove the solid particles in suspension from a semiconductor in a colloidal state. This method offers an alternative to the standard methods of filtering this type of suspensions. The method is of special application in water treatment procedures.

In water purification processes by photocatalysis (solar or artificial) a semiconductor is used which, in the presence of sufficiently energetic photons and water, acts as a catalyst of oxidation reactions, since it is capable of generating OH radicals of highly oxidant properties. When in the aqueous means, the semiconductor (photocatalyzer), the ultraviolet light and the toxic compounds in aqueous dissolution come into contact, oxidation reactions are produced which break the bonds of the toxic molecules until their complete degradation into CO₂ and ions in dissolution.

When using this technology to purify residual or contaminated water there are two possibilities.

The first possibility uses a catalyzer supported on the reactor's glass tubes, and it has the advantage that the water to be cleaned passes through the reactor and, when the degradation process ends, water with a certain amount of ions is obtained. The inconvenience of using a supported catalyst is that the effective area that the catalyzer presents for the dissolution is very small and, therefore, the efficiency of the photocatalytic process is very low, at least of a magnitude smaller than the photocatalysis processes that use the catalyzer in colloidal suspension.

The second possibility is to use the catalyzer particles (for example a semiconductor of the TiO₂, doped TiO₂, ZnO, type, etc.) in aqueous suspension (or colloidal suspension). In this way the active surface of the catalyzer against the dissolution is very high and very high photocatalytic efficiencies are obtained. However, the great disadvantage of this second technology is that, when the degradation process has finished, to separate the catalyzer from the dissolution is complicated. It is possible to submit it to a simple decantation without modifying the properties of the colloidal suspension, but this is a slow process which, within the purely commercial sphere of application of the technology, is not adequate because of needing too extensive storage times. Another way of removing the catalyzer is microfiltration. Standard filtration can not be applied since the semiconductor particles that are commonly used in photocatalysis have a size inferior to 100 nm. Microfiltration would be the most adequate if it did not have the great inconvenience of its high cost.

Thus, European Patent EP 0 334 078 describes a method to eliminate contamination in water courses caused by the herbicide Bentazon by means of the mineralization of the carbon atoms contained in its molecule to CO₂ provoked by the light energy in the presence of TiO₂ as a photocatalyzer. The method uses titanium dioxide as is, or on an adequate support. Consequently it is not necessary to remove the photocatalyzer.

European Patent EP 0 401 884, of the same requester, introduces a specially designed reactor which improves the performance of the operation which, now, is extended to the purification of general contamination substances. With this same object of improving performances, the photocatalyzer supported by titanium oxide is substituted, either in the form of microspheres or in the form of a colloidal suspension. All of the embodiment examples in this document are presented based on the use of microspheres, which is logical if we take into account that their effective surface is three times higher than that which the photocatalyzer in colloidal suspension presents. As of today, there does not exist a method adapted to industrial use which allows the efficient and economical removal of the titanium dioxide from the colloidal suspension.

The objective of the present invention is to have a method that can be used industrially which allows the separation of the photocatalyzer colloidal particles in order to make a real use of photocatalyzers in colloidal suspension possible in water purification.

The invention's method consists of the pH control of the colloidal suspension, modifying it in such a way so as to operate in the isoelectric point (or of zero electrical charge), which is characteristic of each type of particle in the presence of a determined electrolyte. This method is based on the basic preliminary study of the suspension from the point of view of the colloidal stability and the electrokinetic charge that the colloidal particles present in the midst of the suspension.

The essential advantage of the proposed method is the attaining of the sedimentation of colloidal particles in a large size tank by means of the annulling of the electrical charge of the particles, avoiding that these repel between each other, which greatly facilitates the sedimentation process. The method is simple, can be automated and, consequently, is easy to apply industrially.

To complement the description that has just been made and with the object of helping to gain a better comprehension of the characteristics of the invention, a detailed description of it will be made based on a set of plans that accompany this description, comprising an integral part of it, and wherein with a merely orienting and not limiting nature the following has been represented:

Figure 1 shows an operational drawing of the method of sedimentation.

Figure 2 represents the results obtained during a process of sedimentation. Shown are the relative concentration values of particles of equal suspensions, one outside of the zero charge point and another inside the zero charge point.

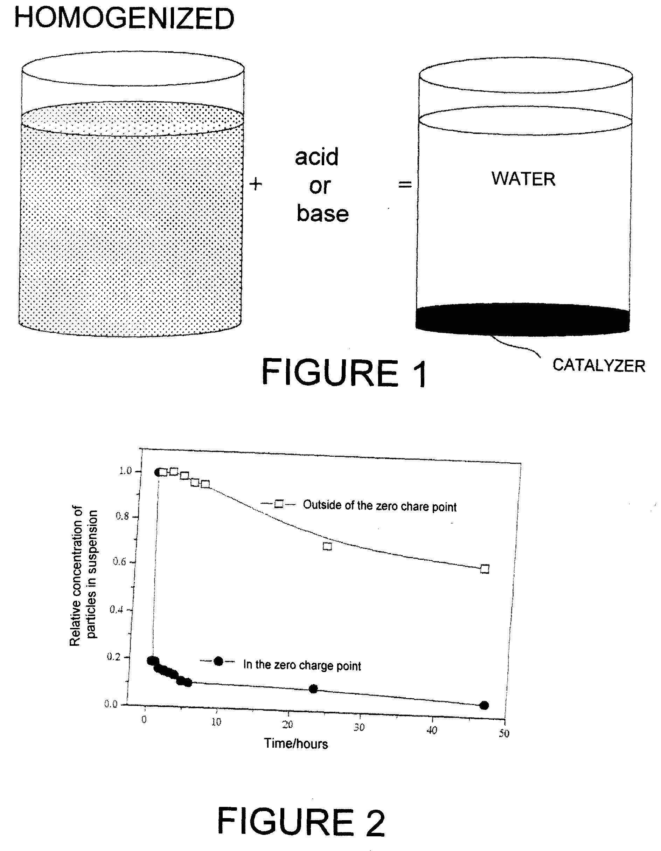

As can be appreciated from Figure 1, the water treated by photocatalysis is stored in an appropriate tank, being submitted to a homogenized treatment by means of the action of conventional mixers. Once the mixture of water and semiconductor in colloidal suspension is homogenized a sample representative of the total volume is taken and an acid or a base is added until attaining the isoelectric point or zero charge point. The amount of acid or base used is extrapolated to the total volume of the storage tank and it is added to it in order to obtain the isoelectric point or zero charge point of the total volume stored. After waiting for the sedimentation of the semiconductor photocatalyzer to occur, the clean supernatant is removed, which consists of water with a very low concentration of semiconductor, which can then be freely discharged back into the course. The waiting time for the discharge after the sedimentation of the semiconductor photocatalyzer varies according to the size of the storage tank. An indication of its magnitude is given in Figure 2 obtained during real tests.

The described procedure may vary slightly in the case of automated processes, always within the philosophy extolled by the described method of sedimentation.

## Claims

1. Method of sedimentation of colloidal semiconductor particles in water purification processes by means of the use of a semiconductor as a photocatalyzer, characterized in that it consists in displacing the pH of the suspension to the isoelectric point, or zero charge point, in such a way as to eliminate the forces of repulsion between the particles of the colloidal suspension.

2. Method of sedimentation of colloidal semiconductor particles according to claim 1, characterized in that the method consists of the following steps:
Storing the semiconductor suspension after the photocatalysis treatment in a storage tank.
Homogenizing the suspension by means of mixers.
Taking a sample representative of the total volume and adding a base or an acid until attaining the zero charge point.
Adding the adequate amount of base or acid, extrapolated from the previous step, to the storage tank to obtain the zero charge point of the total volume stored in the tank. Waiting until the sedimentation occurs.
Removing the clean supernatant, consisting of water with a very low concentration of semiconductor.
